# EUROPÄISCHE PATENTSCHRIFT

(11) **EP 0 967 426 B1**
(45) Veröffentlichungstag und Bekanntmachung des Hinweises auf die Patenterteilung: **12.04.2006**
(21) Anmeldenummer: 99810227.1
(22) Anmeldetag: 12.03.1999
(51) Int. Cl.: F16L 21/03, E03F 3/04, F16L 47/06, F16L 21/02, F16L 17/025, F16J 15/32

(54) **Dichtungsring zum Einsetzen in eine Sicke einer Rohrmuffe**
Ring seal to be placed in a groove of a pipe socket
Joint torique pour montage dans une rainure d'un manchon pour tuyaux

(30) Priorität: 22.06.1998 CH 133298
(43) Veröffentlichungstag der Anmeldung: 29.12.1999
(73) Patentinhaber: GEBERIT TECHNIK AG, 8645 Jona (CH)
(72) Erfinder: Schuster, Alexander, 8645 Jona (CH)
(74) Vertreter: Groner, Manfred

(56) Entgegenhaltungen:
- EP-A- 0 386 516
- EP-A- 0 448 921
- DE-C- 4 136 519
- US-A- 4 018 461
- US-A- 4 371 179

## Beschreibung

Die Erfindung betrifft einen Dichtungsring nach dem Oberbegriff des Anspruchs 1.

Ein Dichtungsring dieser Gattung ist aus der DE 41 36 519 bekannt geworden. Bei diesem sind die seitlich neben der Dichtlippe angeordneten Absätze so ausgebildet, dass jeweils die Innendurchmesser dieser Absätze in Richtung weg von der Dichtlippe abnehmen. Damit soll es möglich sein, bei guten Dichtungseigenschaften ein Herausrutschen des Dichtungsringes aus der Sicke beim Einschieben des Muffenrohres zu verhindern. Zum Einschieben des Muffenrohres sollen nur geringe Kräfte erforderlich sein.

Durch die US-A-4,018,461 ist eine Steckmuffe mit Dichtungsringen bekannt geworden. Die Dichtungsringe weisen jeweils einen Wulst zur Verankerung des Dichtungsrings in einer Innennut der Steckmuffe auf. Am Wulst ist ein nach innen ragender Lappen angeformt, der an einer Seitenfläche zwei umlaufende Rippen aufweist, die an die Aussenseite eines eingeschobenen Rohres anlegbar sind. Die Rippen sollen auch bei rauen Rohroberflächen die Dichtwirkung gewährleisten.

Bei Steckverbindungen besteht nun das Problem, dass in der Praxis nicht zu vermeiden ist, dass die Muffe und das Rohr zueinander nicht genau fluchten, wobei Abweichungen von 5 bis 100% möglich sind. Ebenfalls lassen sich wesentliche Unebenheiten und Unrundheiten am Rohr und an der Muffe nicht vermeiden. Ein Neigungswinkel zwischen Muffe und Rohr sowie der genannten Unebenheiten und Unrundheiten können jedoch die Dichtwirkung beeinträchtigen.

Der Erfindung liegt die Aufgabe zugrunde, einen Dichtungsring der genannten Gattung zu schaffen, der bei einem Neigungswinkel zwischen Muffe und Rohr von beispielsweise 5° bis 10° noch sicherer abdichtet und bei dem zudem Unebenheiten sowie Unrundheiten nicht zu Undichtigkeit führen.

Die Aufgabe ist bei einem Dichtungsring der genannten Gattung gemäss Anspruch 1 gelöst. Eine solche Seitendichtlippe verkleinert die Dichtfläche und erhöht damit den Anpressdruck entlang einer umlaufenden und linienförmigen Dichtfläche. Unebenheiten und Unrundheiten sowie andere Fertigungstoleranzen werden wirksam durch Verformung der Seitendichtlippe ausgeglichen. Mit dieser Seitendichtlippe kann das Rohr rundum auf einer schmalen linienförmigen Fläche abgedichtet werden. Da verglichen mit dem bekannten Dichtungsring die Dichtfläche wesentlich geringer ist, ist wie erwähnt der Flächendruck höher. Damit kann die Anpresskraft verringert werden, was bei gleicher Dichtwirkung zu einer geringeren Verschiebkraft führt. Eine kleinere Verschiebkraft mindert die Gefahr, dass der Dichtungsring beim Verschieben des Rohres aus der Sicke herausgezogen wird. Die bei eingeschobenem Rohr am Rumpf anliegende Seitendichtlippe erhöht durch die gebildeten Zwischenräume zwischen der Dichtlippe und dem Rumpf die Flexibilität und damit die Anpassbarkeit der Dichtlippe an die Aussenseite des Rohres.

Die Seitendichtlippe schmiegt sich dann besonders wirksam an die Rohraussenseite an, wenn diese als vorstehende Rippe ausgebildet ist. Die Dichtwirkung wird erhöht, wenn gemäss einer Weiterbildung der Erfindung wenigstens zwei, vorzugsweise drei parallel und im Abstand zueinander angeordnete Seitendichtlippen vorgesehen sind. Sind diese Lippen unterschiedlich hoch ausgebildet, so können noch wirksamer Unebenheiten und Unrundheiten sowie ein Neigungswinkel zwischen Rohr und Muffe ausgeglichen werden.

Die Seitendichtlippen sind vorzugsweise nahe der Stirnseite der Hauptdichtlippe angeordnet. Bei eingeschobenem Rohr werden durch die abnehmende Spannkraft zur Stirnseite der umgelegten Hauptdichtlippe Rohrtoleranzen besser ausgeglichen. Vorzugsweise ist eine Seitendichtlippe unmittelbar hinter einer Stirnseite der Hauptdichtlippe angeordnet.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
Figur 1 einen Längsschnitt durch einen Abschnitt eines Muffenrohres mit einem in eine Sicke eingesetzten Dichtungsring,
Figur 2 ein Querschnitt durch einen erfindungsgemässen Dichtungsring, und
Figur 3 einen Längsschnitt durch eine Muffe mit einem eingesetzten erfindungsgemässen Dichtungsring sowie einem eingeschobenen Rohrende.

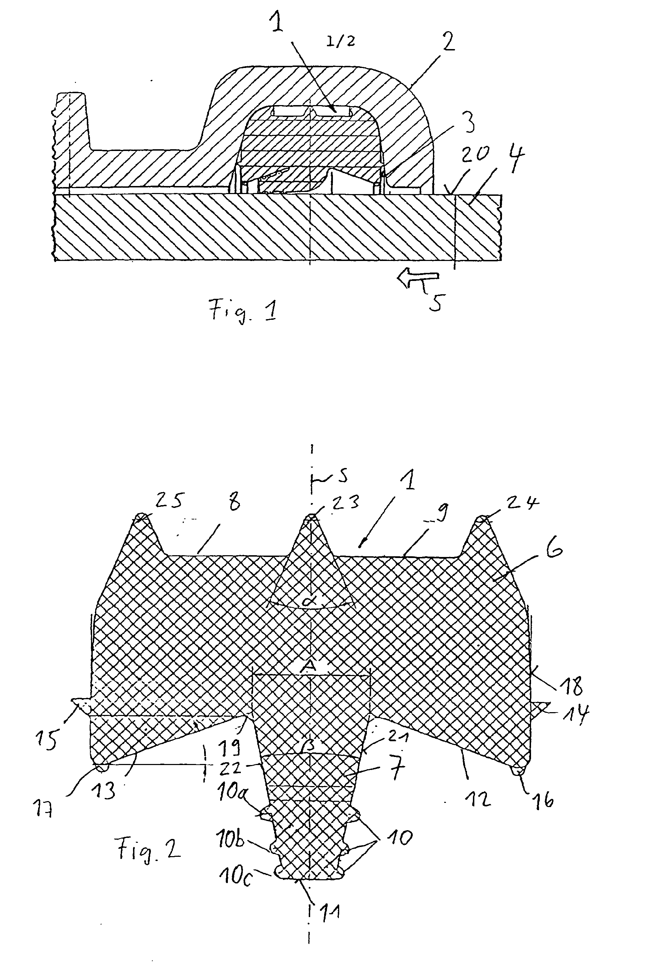

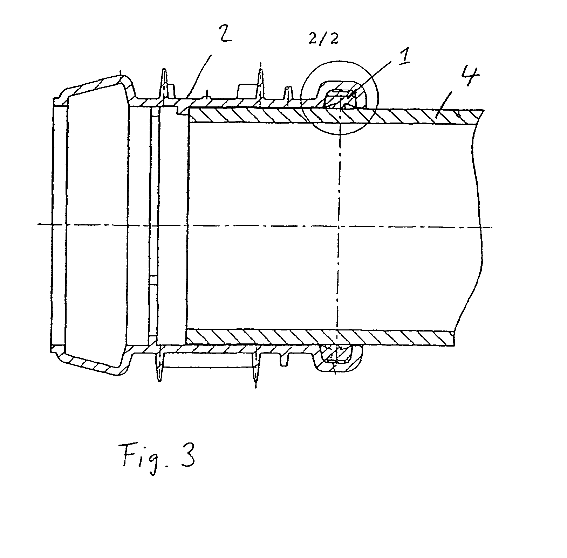

Die Figuren 1 und 3 zeigen eine Doppelsteckmuffe 2, die innenseitig eine umlaufende Sicke 3 besitzt, in welche ein gummielastischer Dichtungsring 1 eingelegt ist. Der Dichtungsring 1 dichtet die Doppelsteckmuffe 2 gemäss Figur 1 gegenüber der Aussenseite 20 eines Rohres 4 ab. Das Rohr 4 ist in Richtung des Pfeiles 5 in die Muffe 2 eingeschoben. Eine ursprünglich gemäss Figur 2 radial abstehende Dichtlippe 7 wird beim Einschieben des Rohres 4 in die in Figur 1 gezeigte Lage um etwa 90° umgelegt und liegt unter Spannung an der Aussenseite 20 des Rohres 4 an. Hierzu wird auf die bereits oben genannte DE 41 36 519 verwiesen, die hier zur Offenbarung beigezogen wird.

Der Dichtungsring 1 ist gemäss Figur 2 bezüglich einer Ebene S spiegelsymmetrisch. Die Dichtlippe 7 ist zwischen zwei kegelförmigen Flächen 12 und 13 an einen Rumpf 6 des Dichtungsringes 1 angeformt und im Querschnitt trapezförmig. Eine zylindrische Stirnfläche 11 ist im Abstand zu einer Ansatzstelle 19 der Dichtlippe 7 angeordnet. Zwei Seitenflächen 21 und 22 der Dichtlippe 7 schliessen eine Winkel β von vorzugsweise etwa 22° ein. Je nach Position des Dichtungsringes 1 in der Sicke 3 liegt die Fläche 21 oder 22 an der Aussenseite 20 des Rohres 4 an. Die andere Fläche 22 bzw. 21 wird gegen die Fläche des Absatzes 12 bzw. 13 gespannt.

Wesentlich für die Erfindung sind nun die Seitendichtlippen 10, die vorzugsweise bucklige Rippen bilden und an der Dichtlippe 7 angeformt sind. Vorzugsweise sind an beiden Flächen 21 und 22 mehrere solche Seitendichtlippen 10 angeformt. Möglich ist auch eine Ausführung mit weniger als drei oder mehr als drei Seitendichtlippen 10.

Wie die Figur 2 zeigt, befinden sich die Seitendichtlippen 10 im unteren Bereich der Dichtlippe 7 und damit vergleichsweise nahe der zylindrischen Stirnfläche 11. Zwei Seitendichtlippen 10c sind unmittelbar hinter der Stirnfläche 11 angeordnet. Zwei mittlere Seitendichtlippen 10b befinden sich zwischen weiter hinten angeordneten Seitendichtlippen 10a und den Dichtlippen 10c. Die am weitesten von der Stirnseite 11 angeordneten Seitendichtlippen 10a sind wie ersichtlich höher als die übrigen Seitendichtlippen 10b und 10c. Wie die Figur 1 zeigt, werden diese Seitendichtlippen 10 durch die Spannung der Dichtlippe 7 an die Aussenseite 20 des Rohres angelegt. Gleichzeitig werden die gegenüberliegenden Seitendichtlippen 10 an die Absätze 12 bzw. 13 angepresst. Die an der Rohraussenseite 20 anliegenden Seitendichtlippen 10 bilden jeweils eine schmale linienförmige Dichtfläche und werden durch die Spannkraft der Dichtlippe 7 deformiert, wobei Unebenheiten und Unrundheiten des Rohres 4 ausgeglichen werden. Da die Dichtfläche insgesamt vergleichsweise klein ist, sind die Reibungskräfte gegenüber dem Rohr 4 vergleichsweise klein. Die am Rohr 4 aufzuwendende Verschiebekraft ist deshalb vergleichsweise gering, wobei gleichzeitig eine hohe Dichtwirkung erreicht wird. Die an der Fläche 12 bzw. 13 anliegenden Seitendichtlippen 10 erhöhen durch die gebildeten Zwischenräume zwischen der Dichtlippe 7 und dem Rumpf 6 die Flexibilität und damit die Anpassbarkeit der Dichtlippe 7 an die Aussenseite 20 des Rohres 4.

Die Dichtwirkung gegenüber der Muffe 2 wird durch weitere spitzwinklige Dichtlippen 14 und 15 erhöht, welche an Seitenflächen 18 des Rumpfes 6 angeformt sind. Weitere Seitendichtlippen 16 und 17 sind innenseitig und im Bereich des kleinsten Innendurchmessers an den Absätzen 12 und 13 angeformt. Bei einer Schrägstellung des Dichtungsringes 1 übernehmen diese Seitendichtlippen 16 und 17 eine Dichtwirkung gegenüber der Aussenseite 20 des Rohres 4.

Rückseitig weist der Dichtungsring 1 zwei umlaufende parallele Ausnehmungen 8 und 9 auf, die vergleichsweise breit sind und in eine mittige, im Querschnitt spitzwinklige und kegelförmige Dichtlippe 23 sowie seitliche Dichtlippen 24 und 25 mit ähnlichem Querschnitt bilden. Wie die Figur 1 zeigt, sind bei eingelegtem Dichtungsring 1 die Dichtlippen 24 und 25 nach innen geneigt und deformiert, so dass sie in der Sicke 3 an der Muffe 2 mit Spannung dichtend anliegen. Der in Figur 2 gezeigte Winkel α ist wesentlich kleiner als 90°, vorzugsweise etwa 45°.

Der erfindungsgemässe Dichtungsring 1 lässt sich automatisch montieren und ist in der Herstellung trotz den genannten Vorteilen nicht teurer als der Dichtungsring nach dem Stand der Technik. Da er sich wie erwähnt weitgehend an Form- und Lageabweichungen anpassen kann, sind bei der Muffe 2 grössere Fertigungstoleranzen als bisher möglich, was die Herstellungskosten solcher Muffen wesentlich vermindert.

## Patentansprüche

1. Dichtungsring zum Einsetzen in eine Sicke (3) einer Rohrmuffe (2), mit einer sich ins Muffeninnere erstreckenden ringförmigen und elastisch verformbaren Dichtlippe (7) und mit der Dichtlippe (7) benachbarten ringförmigen und radial zurückversetzten Absätzen (12, 13) eines Rumpfes (6), wobei die Dichtlippe (7) zwei gegenüberliegende Seitenflächen (21, 22) aufweist, **dadurch gekennzeichnet, dass** die Dichtlippe (7) zur Verkleinerung ihrer Dichtfläche und zur Bildung von Zwischenräumen zwischen dem Rumpf (6) und der Dichtlippe (7)wenigstens eine umlaufende Seitendichtlippe (10) an der einen Seitenfläche (21) der Dichtlippe (7) und wenigstens eine weitere umlaufende Seitendichtlippe (10) an der anderen Seitenfläche (22) der Dichtlippe (7) aufweist.

2. Dichtungsring nach Anspruch 1, **dadurch gekennzeichnet, dass** die Seitendichtlippe (10) als vorstehende Rippe ausgebildet ist.

3. Dichtungsring nach Anspruch 1 oder 2, **dadurch gekennzeichnet, dass** an wenigstens einer Seitenfläche (21, 22) wenigstens zwei, vorzugsweise drei parallele und im Abstand zueinander angeordnete Seitendichtlippen (10) vorgesehen sind.

4. Dichtungsring nach einem der Ansprüche 1 bis 3, **dadurch gekennzeichnet, dass** die Dichtlippe (7) im Querschnitt trapezförmig ausgebildet ist.

5. Dichtungsring nach einem der Ansprüche 1 bis 4, **dadurch gekennzeichnet, dass** die Seitendichtlippen (10) im Querschnitt buckelförmig ausgebildet sind.

6. Dichtungsring nach einem der Ansprüche 1 bis 5, **dadurch gekennzeichnet, dass** die Seitendichtlippen (10) einen Abstand zu einer Stirnseite (11) der Dichtlippe (7) aufweisen, der wesentlich kleiner ist als der Abstand dieser Stirnseite (11) zu einer Ansatzstelle (19) der Dichtlippe (7).

7. Dichtungsring nach einem der Ansprüche 1 bis 6, **dadurch gekennzeichnet, dass** er bezüglich einer Spiegelebene (S) symmetrisch ausgebildet ist.

8. Dichtungsring nach einem der Ansprüche 1 bis 7, **dadurch gekennzeichnet, dass** wenigstens eine weitere Seitendichtlippe (16, 17) an einen der beiden Absätze (12, 13) angeordnet ist.

9. Dichtungsring nach einem der Ansprüche 1 bis 8, **dadurch gekennzeichnet, dass** die Seitendichtlippen (10) unterschiedlich hoch ausgebildet sind.

10. Dichtungsring nach einem der Ansprüche 1 bis 9, **dadurch gekennzeichnet, dass** rückseitig wenigstens eine im Querschnitt spitzwinklige Dichtlippe 23, 24, 25) angeformt ist.

## Claims

1. Sealing ring for inserting in a bead (3) of a pipe socket (2) with an annular and elastically deformable sealing lip (7) extending into the socket interior and with radially offset shoulders (12, 13) of a body (6) adjacent to the sealing lip (7), which sealing lip (7) has two oppositely lying side faces 21, 22, **characterised in that** the sealing lip (7) has at least one peripheral side sealing lip (10) on one side face (21) of the sealing lip (7) and at least one other peripheral side sealing lip (10) on the other side face (22) of the sealing lip (7) in order to reduce its sealing surface and form gaps between the body (6) and the sealing lip (7).

2. Sealing ring as claimed in claim 1, **characterised in that** the side sealing lip (10) is provided in the form of a projecting rib.

3. Sealing ring as claimed in claim 1 or 2, **characterised in that** at least two, preferably three, parallel side sealing lips (10) are provided on at least one side surface (21, 22) disposed at a distance apart from one another.

4. Sealing ring as claimed in one of claims 1 to 3, **characterised in that** the sealing lip (7) has a cross-section of trapezoidal shape.

5. Sealing ring as claimed in one of claims 1 to 4, **characterised in that** the side sealing lips (10) have a hump-backed shape in cross-section.

6. Sealing ring as claimed in one of claims 1 to 5, **characterised in that** a distance between the side sealing lips (10) and a front end face (11) of the sealing lip (7) is significantly smaller than the distance of this front end face (11) from a stepped point (19) of the sealing lip (7).

7. Sealing ring as claimed in one of claims 1 to 6, **characterised in that** it is symmetrical by reference to a mirror plane (S).

8. Sealing ring as claimed in one of claims 1 to 7, **characterised in that** at least one other side sealing lip (16, 17) is disposed on one of the two shoulders (12, 13).

9. Sealing ring as claimed in one of claims 1 to 8, **characterised in that** the side sealing lips (10) are of differing heights.

10. Sealing ring as claimed in one of claims 1 to 9, **characterised in that** at least one sealing lip (23, 24, 25) with a pointed cross-section is integrally formed on the rear end face.

## Revendications

1. Bague d'étanchéité à installer dans une nervure (3) d'un manchon de tuyau (2), avec une lèvre d'étanchéité (7) annulaire et élastique s'étendant à l'intérieur du manchon et des renfoncements (12, 13) d'un corps (6) annulaires ramenés radialement en arrière, voisins de la lèvre d'étanchéité (7), la lèvre d'étanchéité (7) présentant deux faces latérales opposées (21, 22), **caractérisée en ce que** la lèvre d'étanchéité (7), pour réduire sa surface d'étanchéité et pour former des interstices entre le corps (6) et la lèvre d'étanchéité (7), présente au moins une lèvre d'étanchéité latérale périphérique (10) sur une face latérale (21) de la lèvre d'étanchéité (7) et au moins une autre lèvre d'étanchéité latérale périphérique (10) sur l'autre face latérale (22) de la lèvre d'étanchéité (7).

2. Bague d'étanchéité selon la revendication 1, **caractérisée en ce que** la lèvre d'étanchéité latérale (10) est configurée comme une nervure saillante.

3. Bague d'étanchéité selon la revendication 1 ou 2, **caractérisée en ce que** sur au moins une face latérale (21, 22) sont prévues au moins deux, de préférence trois lèvres d'étanchéité latérales (10) parallèles et espacées entre elles.

4. Bague d'étanchéité selon l'une quelconque des revendications 1 à 3, **caractérisée en ce que** la lèvre d'étanchéité (7) présente une section transversale trapézoïdale.

5. Bague d'étanchéité selon l'une quelconque des revendications 1 à 4, **caractérisée en ce que** les lèvres d'étanchéité latérales (10) présente une section transversale en forme de bosse.

6. Bague d'étanchéité selon l'une quelconque des revendications 1 à 5, **caractérisée en ce que** les lèvres d'étanchéité latérales (10) présentent par rapport à une face frontale (11) de la lèvre d'étanchéité (7) une distance qui est sensiblement inférieure à la distance de cette face frontale (11) par rapport à un point de rattachement (19) de la lèvre d'étanchéité (7).

7. Bague d'étanchéité selon l'une quelconque des revendications 1 à 6, **caractérisée en ce qu'**elle est symétrique par rapport à un plan spéculaire (S).

8. Bague d'étanchéité selon l'une quelconque des revendications 1 à 7, **caractérisée en ce qu'**au moins une autre lèvre d'étanchéité latérale (16, 17) est disposée sur l'un des deux renfoncements (12, 13).

9. Bague d'étanchéité selon l'une quelconque des revendications 1 à 8, **caractérisée en ce que** les lèvres d'étanchéité latérales (10) sont de hauteur différente.

10. Bague d'étanchéité selon l'une quelconque des revendications 1 à 9, **caractérisée en ce qu'**au dos est formée au moins une lèvre d'étanchéité (23, 24, 25) de section transversale acutangle.
